# FASCICULE DE BREVET EUROPEEN

(11) **EP 1 231 082 B1**
(45) Date de publication et mention de la délivrance du brevet: **15.06.2005**
(21) Numéro de dépôt: 01402963.1
(22) Date de dépôt: 19.11.2001
(51) Int. Cl.: B60C 23/04

(54) **Procédé et dispositif de traîtement d'un signal capté à bord d'un véhicule en provenance d'une de ses roues, et procédé d'apprentissage correspondant**
Vorrichtung und Verfahren zur Verarbeitung von einem aus ein von den Rädern kommendem Signal in einem Fahrzeug, und Lernverfahren dafür
Device and method for processing a signal received inside a vehicle and originating from one of its wheels, and corresponding learning process

(30) Priorité: 11.01.2001 FR 0100321
(43) Date de publication de la demande: 14.08.2002
(73) Titulaire: Sagem S.A., 75015 Paris (FR)
(72) Inventeur: Fondeur, Jean-Christophe, 92300 Levallois-Perret (FR); Chastel, Pierre, 77780 Bourron-Marlotte (FR)
(74) Mandataire: Loisel, Bertrand

(56) Documents cités:
- WO-A-97/18961
- FR-A- 2 774 178

## Description

La présente invention concerne les techniques de localisation de roues, utilisées dans certains véhicules dont les roues sont munies de modules de détection et d'émission.

De tels modules effectuent des mesures sur les roues et émettent un signal sur une liaison sans fil (habituellement radio) vers un module de réception installé à bord du véhicule pour rendre compte des mesures ou de conditions particulières détectées à partir des mesures effectuées.

L'application la plus courante en est la mesure de la pression des pneumatiques. D'autres paramètres peuvent toutefois être mesurés, par exemple la température. L'exploitation de telles mesures permet au conducteur du véhicule de se rendre compte de conditions anormales pouvant se produire, ou simplement de connaître les paramètres mesurés. Il convient pour cela de lui indiquer quelle roue est concernée.

A cette fin, il est connu d'inclure un identifiant caractéristique de la roue dans le signal émis par le module installé sur cette roue.

Un problème que cela pose est que les roues du véhicule peuvent être permutées lors de diverses opérations de réparation ou de maintenance, de sorte que l'identification d'une roue ne permet plus au conducteur de la localiser sur le véhicule.

Le brevet européen 0 626 911 décrit un dispositif de surveillance de la pression des pneumatiques des roues d'un véhicule dans lequel il est prévu que le récepteur puisse fonctionner aussi dans un mode d'appariement dans lequel il établit une association entre chaque identifiant inclus dans le signal émis par un module et une position de roue. Un passage en mode d'appariement doit au moins être effectué après chaque substitution de roue. C'est un processus relativement laborieux: après avoir fait passer manuellement le récepteur en mode d'appariement, l'opérateur doit dégonfler ou regonfler un pneu pour permettre de repérer le signal de détection dont les mesures reflètent la modification de pression ; l'opérateur indique quelle est la position de la roue dont il a dégonflé ou regonflé le pneu et une association est mémorisée entre cette position de roue et l'identifiant récupéré dans le signal de détection qui a été repéré. Pour éviter ces opérations, qui ne peuvent généralement pas être effectuées par le conducteur mais par un technicien, il est possible de multiplier les récepteurs, en en plaçant un en regard de chaque roue : la position du récepteur ayant capté avec la plus grande intensité un signal portant un identifiant donné renseigne alors sur la position de roue correspondante. Mais, par rapport à un récepteur unique, cette solution a l'inconvénient de multiplier les circuits requis par le système.

Dans le brevet européen 0 861 159, il a été proposé de tenir compte des intensités des signaux reçus en provenance des roues afin d'éliminer les signaux éventuellement captés en provenance d'un autre véhicule. Il est aussi proposé d'examiner les fluctuations d'intensité du signal reçu afin de faire une distinction entre la ou les roues de secours du véhicule, qui donnent lieu à une intensité constante puisqu'elles sont immobiles, et les roues installées sur les essieux, pour lesquelles l'intensité varie en raison de leur rotation.

Le brevet français 2 774 178 décrit un procédé dans lequel les circuits de traitement associés au récepteur analysent une signature du signal de détection reçu afin d'affecter le signal à une position de roue particulière. Cette signature est typiquement un profil d'intensité du signal reçu, qui diffère selon la position de la roue sur le véhicule en raison des obstacles différents à la propagation des ondes. C'est donc une reconnaissance de forme qui permet d'associer un signal à une position de roue. Celle-ci peut être effectuée occasionnellement, pour mettre à jour ou valider l'association entre un identifiant et une position de roue, la discrimination étant ensuite effectuée sur la base de l'identifiant détecté. Une phase d'apprentissage initiale, effectuée sur le véhicule lui-même ou sur un autre véhicule du même modèle, sert à déterminer une forme d'onde de référence pour chaque position de roue. Ensuite, la signature observée en phase de reconnaissance est comparée aux différentes formes d'onde de référence pour estimer la position de la roue depuis laquelle le signal est émis.

Ce processus de reconnaissance de forme est relativement délicat étant donné que les signaux détectés sont bruités et déphasés par rapport aux formes d'onde de référence, et qu'ils présentent des fluctuations qui dépendent de la vitesse du véhicule au moment de l'émission du signal de détection, laquelle vitesse peut être différente de celle à laquelle les formes d'onde de référence ont été apprises. Ce processus d'apprentissage peut donc requérir un processeur de signal relativement puissant, ce qui pénalise le coût du dispositif.

Un but de la présente invention est de proposer une méthode de traitement de signal permettant de simplifier les opérations requises, afin notamment de pouvoir utiliser des circuits de traitement relativement simples et économiques.

L'invention propose ainsi un procédé de traitement d'un signal capté par un récepteur installé à bord d'un véhicule ayant plusieurs roues équipées de modules de détection et d'émission respectifs, chaque module de détection et d'émission étant apte à émettre un signal incluant une indication d'un état de la roue équipée dudit module, dans lequel on compare le signal capté à plusieurs formes d'onde respectivement mémorisées en relation avec des positions de roue, pour sélectionner une position de roue pour laquelle la forme d'onde mémorisée concorde avec le signal capté. Suivant l'invention, après un pré-traitement du signal capté et l'identification d'extrema du signal pré-traité, la comparaison entre le signal capté et une forme d'onde comporte l'application d'une transformation temporelle au signal pré-traité pour aligner des premier et second extrema du signal pré-traité avec des premier et second extrema de ladite forme d'onde, et un calcul de distance entre le signal transformé et ladite forme d'onde. On sélectionne alors la position de roue pour laquelle la distance calculée est minimale.

La transformation temporelle appliquée au signal est déterminée à partir d'un nombre restreint de paramètres simples, relatifs aux extrema du signal et des formes d'onde mémorisées. La reconnaissance de la forme d'onde peut ainsi être effectuée de façon fiable avec un nombre assez limité d'opérations.

Diverses dispositions peuvent être adoptées pour limiter encore ce nombre d'opérations. Par exemple, on peut relever la position temporelle et le type (maximum ou minimum) de chaque extremum identifié du signal pré-traité, afin de ne déterminer la transformation temporelle à appliquer pour aligner des premier et second extrema du signal pré-traité avec des premier et second extrema d'une forme d'onde mémorisée que si les premiers extrema sont de même type de même que les seconds extrema.

Les formes d'onde étant mémorisées pour une vitesse de référence du véhicule, on peut aussi obtenir une indication de vitesse du véhicule au moment de la réception du signal capté, relever la position temporelle de chaque extremum identifié du signal pré-traité, puis ne déterminer la transformation temporelle à appliquer pour aligner des premier et second extrema du signal pré-traité avec des premier et second extrema d'une forme d'onde mémorisée que si le rapport entre l'écart temporel entre les premier et second extrema du signal pré-traité et celui entre les premier et second extrema de ladite forme d'onde est compatible avec la vitesse de référence et l'indication de vitesse obtenue selon un critère de compatibilité prédéterminé.

Un autre aspect de la présente invention se rapporte à un dispositif de traitement d'un signal capté par un récepteur installé à bord d'un véhicule ayant plusieurs roues équipées de modules de détection et d'émission respectifs, chaque module de détection et d'émission étant apte à émettre un signal incluant une indication d'un état de la roue équipée dudit module. Le dispositif comprend des moyens de pré-traitement du signal capté, des moyens d'identification d'extrema du signal pré-traité, et des moyens de comparaison du signal capté à plusieurs formes d'onde respectivement mémorisées en relation avec des positions de roue, pour sélectionner une position de roue pour laquelle la forme d'onde mémorisée concorde avec le signal capté. Les moyens de comparaison entre le signal capté et une forme d'onde comportent des moyens d'application d'une transformation temporelle au signal pré-traité pour aligner des premier et second extrema du signal pré-traité avec des premier et second extrema de ladite forme d'onde, et des moyens de calcul de distance entre le signal transformé et ladite forme d'onde, la position de roue étant sélectionnée par minimisation de la distance calculée.

Un troisième aspect de l'invention se rapporte à un procédé d'apprentissage de formes d'onde pour un dispositif de traitement d'un signal capté par un récepteur installé à bord d'un véhicule ayant plusieurs roues équipées de modules de détection et d'émission respectifs, chaque module de détection et d'émission étant apte à émettre un signal incluant une indication d'un état de la roue équipée dudit module. Ce procédé comporte les étapes suivantes pour chacune desdites roues du véhicule :
- enregistrer un signal de référence sensiblement périodique provenant d'un module de détection et d'émission ;
- déterminer la période du signal de référence après un pré-traitement ;
- ré-échantillonner sur N points une période du signal de référence pré-traité, N étant un nombre prédéterminé, et mémoriser la période de signal ré-échantillonné ;
- mémoriser en outre la position temporelle et le type (maximum ou minimum) de chaque extremum dans la période de signal mémorisée.

Les formes d'onde ainsi apprises sont bien adaptées à la mise en oeuvre du procédé de traitement de signal appliqué en phase de reconnaissance.

D'autres particularités et avantages de la présente invention apparaîtront dans la description ci-après d'exemples de réalisation non limitatifs, en référence aux dessins annexés, dans lesquels :
- la figure 1 est une vue schématique d'un véhicule équipé d'un dispositif selon l'invention ; et
- la figure 2 est un schéma synoptique d'un dispositif selon l'invention.

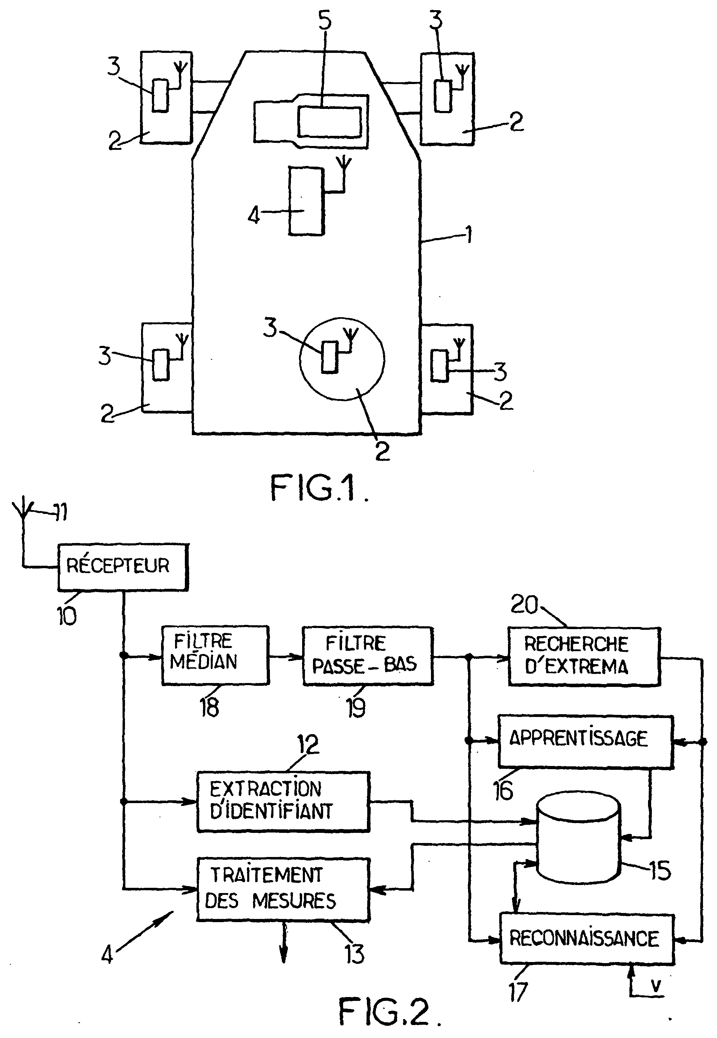

En référence à la figure 1, le procédé de localisation et de reconnaissance de la position d'une roue est destiné à être mis en oeuvre sur un véhicule 1 ayant des roues 2 chacune équipée, de façon connue en soi, d'un module de détection 3 émettant un signal de détection modulé numériquement en amplitude ou en fréquence de façon représentative d'un état de la roue, en particulier la pression et/ou la température d'un pneumatique garnissant la roue, vers un organe de traitement 4 monté dans le véhicule.

Les modules 3 étant montés sur les jantes des roues, c'est-à-dire à distance de l'axe de rotation des roues, la rotation des roues entraîne une différence de propagation des signaux émis par les modules contenus dans les roues droites et gauches. En outre, le bloc moteur 5 constitue un obstacle qui modifie de façon différente la propagation des signaux provenant des modules avant et la propagation des signaux provenant des modules arrière, d'autres éléments de la structure du véhicule étant susceptibles d'augmenter ces différences. Le signal de détection reçu par l'unité de traitement est ainsi modulé en amplitude.

Selon l'invention, on prévoit d'exploiter cette modulation pour déterminer une forme d'onde du signal de détection pour chaque position de roue. La forme d'onde est par exemple déterminée en filtrant et en traitant de façon appropriée le signal de détection reçu par l'organe de traitement 4 au cours d'une phase d'apprentissage initiale.

Ensuite, un processus de reconnaissance est utilisé pour attribuer les signaux de détection reçus par l'organe de traitement 4 aux différentes positions de roue, par comparaison avec les formes d'onde apprises et mémorisées.

La figure 2 illustre une organisation possible de l'organe de traitement 4 ayant un ensemble de modules 13-20. Dans la pratique, l'organe 4 peut être réalisé au moyen d'un processeur de signal numérique classique associé à des instructions de programme correspondant fonctionnellement à ces différents modules 13-20.

Un récepteur 10 reçoit le signal radio capté par l'antenne 11 de l'organe 4 installée à bord du véhicule, par exemple sous le châssis. Le récepteur 10 effectue les traitements analogiques requis sur le signal capté, et le numérise en vue des traitements suivants.

En service, les modules de détection 3 émettent un signal de détection pouvant inclure un préambule servant à l'acquisition du signal et à la synchronisation du récepteur, une portion contenant un identifiant du module 3 et une portion destinée à contenir les résultats des mesures. Cette émission peut être effectuée régulièrement ou occasionnellement, lorsque des conditions particulières sont détectées.

L'identifiant est extrait du signal numérique de sortie du récepteur 10 par un module d'extraction 12. Un module 13 de traitement des mesures manipule les données transmises par les modules de détection 3 afin de signaler au conducteur du véhicule les problèmes éventuellement détectés, ou afin de lui faire connaître les valeurs mesurées. Dans les informations communiquées, le module de traitement 13 insère une indication de la position de la roue concernée, qu'il récupère dans une table de correspondance stockée dans une mémoire 15 sur la base de l'identifiant qui a été extrait par le module 12.

La mémoire 15 contient en outre les formes d'onde enregistrées au cours de la phase d'apprentissage. Dans l'exemple représenté sur la figure 2, l'apprentissage est assuré par un module 16 de l'organe de traitement 4. Il est effectué une fois pour toutes en usine. Dans une autre réalisation, l'organe de traitement 4 pourrait ne pas comporter de module d'apprentissage 16, les formes d'onde ayant été apprises sur un véhicule-test différent (mais du même modèle).

Dans la mémoire 15, les formes d'onde relatives aux différentes positions de roue sont chacune associées à un identifiant respectif susceptible d'être extrait par le module 12. L'association est définie au moyen d'un module de reconnaissance 17 coopérant avec la mémoire 15.

Les modules 16 et 17 fonctionnent avec une chaîne de pré-traitement du signal capté qui, dans l'exemple représenté, comprend deux filtres passe-bas successifs 18, 19. Le premier filtre 18 a pour fonction d'enlever les parasites à haute fréquence du signal. Il peut par exemple appliquer un filtrage de type médian sur trois échantillons successifs du signal numérique capté. Le deuxième filtre passe-bas 19 lisse le signal afin de supprimer des fluctuations résiduelles à court terme susceptibles de multiplier les extrema non significatifs du signal. C'est par exemple un filtre à réponse impulsionnelle finie d'ordre 6 de type Butterworth.

Un module 20 recherche ensuite les extrema du signal de sortie du second filtre passe-bas 19. Il identifie chaque extrema de ce signal, en relevant son type (maximum ou minimum) ainsi que sa position temporelle dans le signal reçu (par rapport à une origine arbitraire).

Dans la phase d'apprentissage, le module 16 estime la période T du signal pré-traité délivré par le filtre passe-bas 19, ce signal étant sensiblement périodique. Pour cela, le module 16 calcule la fonction d'autocorrélation du signal pré-traité pour un certain nombre de retards. Afin d'alléger les calculs, ces retards sont limités à ceux correspondant à une différence entre les abscisses de deux extrema de même type, pour autant que cette différence soit compatible avec la vitesse du véhicule pendant la phase d'apprentissage. Connaissant le rayon R de la roue 2 et la vitesse de référence v₀ à laquelle le véhicule se déplace pendant l'apprentissage, on a en effet une première idée de la période : T₁ ≈ R/v₀. Cette première estimation T₁ est approximative. On l'affine à l'aide du calcul des auto-corrélations, effectué pour des écarts temporels proches de la valeur T₁. La période T finalement retenue est celle pour laquelle l'auto-corrélation calculée est maximale.

Le module 16 ré-échantillonne alors une période du signal pré-traité sur un nombre N de points d'échantillonnage (par exemple N = 64). La liste des extrema qui ont été identifiés par le module 20 à l'intérieur d'une période est ensuite remise à l'échelle pour correspondre à la forme d'onde ré-échantillonnée. Cette liste d'extrema (type, position temporelle) est enregistrée dans la mémoire 15 en liaison avec les N échantillons de la forme d'onde.

L'opération ci-dessus est répétée pour chaque roue mobile du véhicule.

En phase de reconnaissance, le module 17 cherche à faire correspondre le signal pré-traité fourni par le filtre 19 avec chacune des formes d'onde stockées dans la mémoire 15.

Dans une première étape, une association entre un couple d'extrema d'une forme d'onde et un couple d'extrema de même type du signal pré-traité fournit une hypothèse de décalage temporel et d'étirement temporel. De préférence, pour limiter la quantité de calculs, on ne teste que les couples d'extrema qui sont de même type, c'est-à-dire que les premiers extrema des deux couples sont de même type et que les seconds extrema des deux couples sont aussi de même type (les deux extrema d'un couple peuvent toutefois être un maximum et un minimum), et qui fournissent un étirement compatible avec la vitesse du véhicule.

Pour tester cette dernière condition, on considère l'écart temporel d entre les deux extrema du couple de la forme d'onde et l'écart temporel D entre les deux extrema du couple du signal pré-traité. La quantité v₀.d/D doit être comprise dans une plage de vitesse incluant la vitesse v indiquée au module 17 comme étant celle du véhicule au moment où on procède à la reconnaissance. Cette indication de vitesse v provient par exemple d'un tachymètre installé sur le véhicule.

Un ou plusieurs signaux transformés peuvent ainsi être déterminés pour chaque position de roue. Après l'application du décalage et de l'étirement temporels, on procède à un ré-échantillonnage sur toute la durée de la forme d'onde correspondante, interpolée si nécessaire, afin de faciliter la comparaison avec le signal pré-traité. Le module 17 calcule alors une distance entre le signal décalé et étiré et la forme d'onde ré-échantillonnée. Cette distance est par exemple l'erreur quadratique moyenne sur N points entre le signal et la forme d'onde.

Finalement, le module 17 sélectionne la position de roue dont la forme d'onde a donné lieu à la plus petite distance parmi celles qui ont été calculées. Le module 17 enregistre alors dans la mémoire 15 l'identifiant qui a été extrait du signal capté par le module 12, en relation avec la forme d'onde sélectionnée, qui est elle-même en relation avec une position déterminée d'une roue par rapport au véhicule, spécifiée au cours de l'apprentissage.

Ensuite, lorsque le module de traitement 13 exploite les mesures transmises par les modules de détection 3, il obtient la position de la roue émettrice en consultant la mémoire 15 sur la base de l'identifiant extrait du même signal par le module 12.

## Revendications

1. Procédé de traitement d'un signal capté par un récepteur (10) installé à bord d'un véhicule (1) ayant plusieurs roues (2) équipées de modules de détection et d'émission respectifs (3), chaque module de détection et d'émission étant apte à émettre un signal incluant une indication d'un état de la roue équipée dudit module, dans lequel on compare le signal capté à plusieurs formes d'onde respectivement mémorisées en relation avec des positions de roue, pour sélectionner une position de roue pour laquelle la forme d'onde mémorisée concorde avec le signal capté, **caractérisé en ce qu'**après un pré-traitement du signal capté et l'identification d'extrema du signal pré-traité, la comparaison entre le signal capté et une forme d'onde comporte l'application d'une transformation temporelle au signal pré-traité pour aligner des premier et second extrema du signal pré-traité avec des premier et second extrema de ladite forme d'onde, et un calcul de distance entre le signal transformé et ladite forme d'onde, et **en ce qu'**on sélectionne la position de roue pour laquelle la distance calculée est minimale.

2. Procédé selon la revendication 1, dans lequel le pré-traitement du signal capté comporte au moins une opération de filtrage passe-bas.

3. Procédé selon l'une quelconque des revendications précédentes, dans lequel on relève la position temporelle et le type (maximum ou minimum) de chaque extremum identifié du signal pré-traité, et dans lequel on détermine la transformation temporelle à appliquer pour aligner des premier et second extrema du signal pré-traité avec des premier et second extrema d'une forme d'onde mémorisée à condition que les premiers extrema soient de même type et que les seconds extrema soient aussi de même type.

4. Procédé selon l'une quelconque des revendications précédentes, dans lequel les formes d'onde sont mémorisées pour une vitesse de référence du véhicule, dans lequel on obtient une indication de vitesse du véhicule au moment de la réception dudit signal capté, dans lequel on relève la position temporelle de chaque extremum identifié du signal pré-traité, et dans lequel on détermine la transformation temporelle à appliquer pour aligner des premier et second extrema du signal pré-traité avec des premier et second extrema d'une forme d'onde mémorisée à condition que le rapport entre l'écart temporel entre les premier et second extrema du signal pré-traité et l'écart temporel entre les premier et second extrema de ladite forme d'onde soit compatible avec la vitesse de référence et l'indication de vitesse obtenue selon un critère de compatibilité prédéterminé.

5. Procédé selon l'une quelconque des revendications précédentes, dans lequel les formes d'onde mémorisées correspondent chacune à une période d'un signal d'apprentissage sensiblement périodique.

6. Procédé selon l'une quelconque des revendications précédentes, dans lequel chaque forme d'onde est mémorisée sur un nombre N de points d'échantillonnage, dans lequel la transformation temporelle comporte un décalage temporel et un étirement temporel du signal pré-traité pour aligner lesdits extrema, et dans lequel le calcul de distance entre le signal transformé et la forme d'onde comporte un ré-échantillonnage de la forme d'onde, la distance étant calculée sur N points de la forme d'onde ré-échantillonnée et du signal transformé.

7. Dispositif de traitement d'un signal capté par un récepteur (10) installé à bord d'un véhicule (1) ayant plusieurs roues (2) équipées de modules de détection et d'émission respectifs (3), chaque module de détection et d'émission étant apte à émettre un signal incluant une indication d'un état de la roue équipée dudit module, le dispositif (4) comprenant des moyens (17) de comparaison du signal capté à plusieurs formes d'onde respectivement mémorisées en relation avec des positions de roue, pour sélectionner une position de roue pour laquelle la forme d'onde mémorisée concorde avec le signal capté, **caractérisé en ce qu'**il comprend en outre des moyens (18, 19) de pré-traitement du signal capté et des moyens (20) d'identification d'extrema du signal pré-traité, et **en ce que** les moyens (17) de comparaison entre le signal capté et une forme d'onde comportent des moyens d'application d'une transformation temporelle au signal pré-traité pour aligner des premier et second extrema du signal pré-traité avec des premier et second extrema de ladite forme d'onde, et des moyens de calcul de distance entre le signal transformé et ladite forme d'onde, la position de roue étant sélectionnée par minimisation de la distance calculée.

8. Dispositif selon la revendication 7, dans lequel les moyens de pré-traitement comportent au moins un filtre passe-bas (18, 19).

9. Dispositif selon la revendication 7 ou 8, dans lequel les moyens (20) d'identification des extrema du signal pré-traité comprennent des moyens pour relever la position temporelle et le type (maximum ou minimum) de chaque extremum identifié du signal pré-traité, et dans lequel les moyens de comparaison (17) comprennent des moyens pour déterminer la transformation temporelle à appliquer pour aligner des premier et second extrema du signal pré-traité avec des premier et second extrema d'une forme d'onde mémorisée à condition que les premiers extrema soient de même type et que les seconds extrema soient aussi de même type.

10. Dispositif selon l'une quelconque des revendications 7 à 9, agencé pour recevoir une indication de vitesse du véhicule au moment de la réception dudit signal capté, dans lequel les formes d'onde sont mémorisées pour une vitesse de référence du véhicule, dans lequel les moyens (20) d'identification des extrema du signal pré-traité comprennent des moyens pour relever la position temporelle de chaque extremum identifié du signal pré-traité, et dans lequel les moyens de comparaison (17) comprennent des moyens pour déterminer la transformation temporelle à appliquer pour aligner des premier et second extrema du signal pré-traité avec des premier et second extrema d'une forme d'onde mémorisée à condition que le rapport entre l'écart temporel entre les premier et second extrema du signal pré-traité et l'écart temporel entre les premier et second extrema de ladite forme d'onde soit compatible avec la vitesse de référence et l'indication de vitesse reçue selon un critère de compatibilité prédéterminé.

11. Dispositif selon l'une quelconque des revendications 7 à 10, dans lequel chaque forme d'onde est mémorisée sur un nombre N de points d'échantillonnage, dans lequel la transformation temporelle comporte un décalage temporel et un étirement temporel du signal pré-traité pour aligner lesdits extrema, et le calcul de distance entre le signal transformé et la forme d'onde comporte un ré-échantillonnage de la forme d'onde, la distance étant calculée sur N points de la forme d'onde ré-échantillonnée et du signal transformé.

12. Procédé d'apprentissage de formes d'onde pour un dispositif (4) de traitement d'un signal capté par un récepteur (10) installé à bord d'un véhicule (1) ayant plusieurs roues (2) équipées de modules de détection et d'émission respectifs (3), chaque module de détection et d'émission étant apte à émettre un signal incluant une indication d'un état de la roue équipée dudit module, le procédé comprenant les étapes suivantes pour chacune desdites roues du véhicule :
- enregistrer un signal de référence sensiblement périodique provenant d'un module de détection et d'émission ;
- déterminer la période du signal de référence après un pré-traitement ;
- ré-échantillonner sur N points une période du signal de référence pré-traité, N étant un nombre prédéterminé, et mémoriser la période de signal ré-échantillonné ;
- mémoriser en outre la position temporelle et le type (maximum ou minimum) de chaque extremum dans la période de signal mémorisée.

## Patentansprüche

1. Verfahren zur Verarbeitung eines Signals, das von einem Empfänger (10) aufgenommen wird, der an Bord eines Fahrzeugs (1) installiert ist, das mehrere Räder (2) aufweist, die jeweils mit einem Erfassungs- und Sendemodul (3) ausgerüstet sind, wobei jedes Erfassungs- und Sendemodul geeignet ist, ein Signal zu senden, das eine Angabe eines Zustands des mit diesem Modul ausgerüsteten Rads einschließt, bei dem man das aufgenommene Signal mit mehreren jeweils in Zusammenhang mit Radstellungen gespeicherten Wellenformen vergleicht, um eine Radstellung zu wählen, bei der die gespeicherte Wellenform mit dem aufgenommenen Signal übereinstimmt, **dadurch gekennzeichnet, dass** nach einer Vorbehandlung des aufgenommenen Signals und der Identifizierung der Extrema des vorbehandelten Signals der Vergleich zwischen dem aufgenommenen Signal und einer Wellenform die Anlegung einer zeitlichen Umwandlung an das vorbehandelte Signal, um das erste und das zweite Extremum des vorbehandelten Signals mit dem ersten und dem zweiten Extremum dieser Wellenform auszurichten, und eine Berechnung des Abstands zwischen dem umgewandelten Signal und der Wellenform umfasst und dass man die Radstellung wählt, bei der der errechnete Abstand minimal ist.

2. Verfahren nach Anspruch 1, bei dem die Vorbehandlung des aufgenommenen Signals mindestens eine Tiefpaßfilterungsoperation umfasst.

3. Verfahren nach einem der vorhergehenden Ansprüche, bei dem man die zeitliche Stellung und den Typ (Maximum oder Minimum) jedes identifizierten Extremums des vorbehandelten Signals ermittelt und bei dem man die zeitliche Umwandlung bestimmt, die anzulegen ist, um das erste und das zweite Extremum des vorbehandelten Signals mit dem ersten und dem zweiten Extremum einer gespeicherten Wellenform auszurichten, und zwar unter der Bedingung, dass die ersten Extrema vom gleichen Typ sind und die zweiten Extrema ebenfalls vom gleichen Typ sind.

4. Verfahren nach einem der vorhergehenden Ansprüche, bei dem die Wellenformen bei einer Bezugsgeschwindigkeit des Fahrzeugs gespeichert werden, bei dem man eine Angabe der Geschwindigkeit des Fahrzeugs zum Zeitpunkt des Empfangs des aufgenommenen Signals erhält, bei dem man die zeitliche Lage jedes identifizierten Extremums des vorbehandelten Signals ermittelt und bei dem man die zeitliche Umwandlung bestimmt, die anzulegen ist, um das erste und das zweite Extremum des vorbehandelten Signals mit dem ersten und dem zweiten Extremum einer gespeicherten Wellenform auszurichten, und zwar unter der Bedingung, dass das Verhältnis zwischen der zeitlichen Abweichung zwischen dem ersten und dem zweiten Extremum des vorbehandelten Signals und der zeitlichen Abweichung zwischen dem ersten und dem zweiten Extremum dieser Wellenform mit der Bezugsgeschwindigkeit und der erhaltenen Geschwindigkeitsangabe gemäß einem vorbestimmten Kompatibilitätskriterium kompatibel ist.

5. Verfahren nach einem der vorhergehenden Ansprüche, bei dem die gespeicherten Wellenformen jeweils einer Periode eines im wesentlichen periodischen Lernsignals entsprechen.

6. Verfahren nach einem der vorhergehenden Ansprüche, bei dem jede Wellenform an einer Anzahl N von Abtastpunkten gespeichert wird, bei dem die zeitliche Umwandlung eine zeitliche Verschiebung und eine zeitliche Dehnung des vorbehandelten Signals umfasst, um die Extrema auszurichten, und bei dem die Berechnung des Abstands zwischen dem umgewandelten Signal und der Wellenform eine Nachabtastung der Wellenform umfasst, wobei der Abstand an N Punkten der nachabgetasteten Wellenform und des umgewandelten Signals errechnet wird.

7. Vorrichtung zur Verarbeitung eines Signals, das von einem Empfänger (10) aufgenommen wird, der an Bord eines Fahrzeugs (1) installiert ist, das mehrere Räder (2) aufweist, die jeweils mit einem Erfassungs- und Sendemodul (3) ausgerüstet sind, wobei jedes Erfassungs- und Sendemodul geeignet ist, ein Signal zu senden, das eine Angabe eines Zustands des mit diesem Modul ausgerüsteten Rads einschließt, wobei die Vorrichtung (4) Mittel (17) zum Vergleichen des aufgenommenen Signals mit mehreren jeweils in Zusammenhang mit Radstellungen gespeicherten Wellenformen umfasst, um eine Radstellung zu wählen, bei der die gespeicherte Wellenform mit dem aufgenommenen Signal übereinstimmt, **dadurch gekennzeichnet, dass** sie außerdem Mittel (18, 19) zur Vorbehandlung des aufgenommenen Signals und Mittel (20) zur Identifizierung der Extrema des vorbehandelten Signals umfasst und dass die Mittel (17) zum Vergleich zwischen dem aufgenommenen Signal und der Wellenform Mittel zum Anlegen einer zeitlichen Umwandlung an das vorbehandelte Signal, um das erste und das zweite Extremum des vorbehandelten Signals mit dem ersten und dem zweiten Extremum dieser Wellenform auszurichten, und Mittel zur Berechnung des Abstands zwischen dem umgewandelten Signal und dieser Wellenform umfassen, wobei die Radstellung durch Minimierung des errechneten Abstands gewählt wird.

8. Vorrichtung nach Anspruch 7, bei der die Vorbehandlungsmittel mindestens ein Tiefpaßfilter (18, 19) umfassen.

9. Vorrichtung nach Anspruch 7 oder 8, bei der die Mittel (20) zur Identifizierung der Extrema des vorbehandelten Signals Mittel zum Ermitteln der zeitlichen Stellung und des Typs (Maximum oder Minimum) jedes identifizierten Extremums des vorbehandelten Signals umfassen und bei der die Vergleichsmittel (17) Mittel umfassen, um die zeitliche Umwandlung zu bestimmen, die anzulegen ist, um das erste und das zweite Extremum des vorbehandelten Signals mit dem ersten und dem zweiten Extremum einer gespeicherten Wellenform auszurichten, und zwar unter der Bedingung, dass die ersten Extrema vom gleichen Typ sind und dass die zweiten Extrema ebenfalls vom gleichen Typ sind.

10. Vorrichtung nach einem der Ansprüche 7 bis 9, die dafür ausgelegt ist, eine Angabe der Geschwindigkeit des Fahrzeugs zum Zeitpunkt des Empfangs des aufgenommenen Signals zu empfangen, bei der die Wellenformen bei einer Bezugsgeschwindigkeit des Fahrzeugs gespeichert werden, bei der die Mittel (20) zur Identifizierung der Extrema des vorbehandelten Signals Mittel zum Ermitteln der zeitlichen Lage jedes identifizierten Extremums des vorbehandelten Signals umfassen und bei der die Vergleichsmittel (17) Mittel zum Bestimmen der zeitlichen Umwandlung umfassen, die anzulegen ist, um das erste und das zweite Extremum des vorbehandelten Signals mit dem ersten und dem zweiten Extremum einer gespeicherten Wellenform auszurichten, und zwar unter der Bedingung, dass das Verhältnis zwischen der zeitlichen Abweichung zwischen dem ersten und dem zweiten Extremum des vorbehandelten Signals und der zeitlichen Abweichung zwischen dem ersten und dem zweiten Extremum dieser Wellenform mit der Bezugsgeschwindigkeit und der empfangenen Geschwindigkeitsangabe nach einem vorbestimmten Kompatibilitätskriterium kompatibel ist.

11. Vorrichtung nach einem der Ansprüche 7 bis 10, bei der jede Wellenform auf einer Anzahl N von Abtastpunkten gespeichert wird, bei der die zeitliche Umwandlung eine zeitliche Verschiebung und eine zeitliche Dehnung des vorbehandelten Signals umfasst, um die Extrema auszurichten, und die Berechnung des Abstands zwischen dem umgewandelten Signal und der Wellenform eine Nachabtastung der Wellenform umfasst, wobei der Abstand an N Punkten der nachabgetasteten Wellenform und des umgewandelten Signals ermittelt wird.

12. Verfahren zum Lernen von Wellenformen für eine Vorrichtung (4) zur Behandlung eines Signals, das von einem Empfänger (10) aufgenommen wird, der an Bord eines Fahrzeugs (1) installiert ist, das mehrere Räder (2) aufweist, die jeweils mit einem Erfassungs- und Sendemodul (3) ausgerüstet sind, wobei jedes Erfassungs- und Sendemodul geeignet ist, ein Signal zu senden, das eine Angabe eines Zustands des mit diesem Modul ausgerüsteten Rads einschließt, wobei das Verfahren für jedes der Räder des Fahrzeugs die folgenden Schritte umfasst:
- Aufzeichnung eines von einem Erfassungs- und Sendemodul kommenden, im wesentlichen periodischen Bezugssignals,
- Bestimmung der Periode des Bezugssignals nach einer Vorbehandlung,
- Nachabtastung einer Periode des vorbehandelten Bezugssignals an N Punkten, wobei N eine vorbestimmte Zahl ist, und Speicherung der nach abgetasteten Signalperiode,
- ferner Speicherung der zeitlichen Lage und des Typs (Maximum oder Minimum) jedes Extremums in der gespeicherten Signalperiode.

## Claims

1. Method of processing a signal sensed by a receiver (10) installed on board a vehicle (1) having a plurality of wheels (2) fitted with respective detection and transmission modules (3), each detection and transmission module being capable of transmitting a detection signal including an indication of a state of the wheel fitted with said module, wherein the sensed signal is compared with a plurality of waveforms respectively stored in association with wheel positions to select a wheel position for which the stored waveform matches the sensed signal, **characterised in that** after pre-processing the sensed signal and identifying extrema of the pre-processed signal, the comparison of the sensed signal with a waveform comprises applying a time transform to the pre-processed signal to align first and second extrema of the pre-processed signal with first and second extrema of said waveform and computing a distance between the transformed signal and said waveform, and **in that** the wheel position for which the computed distance is minimum is selected.

2. Method as claimed in claim 1, wherein the pre-processing of the sensed signal comprises at least one lowpass, filtering operation.

3. Method as claimed in any one of the preceding claims, wherein the position in time and the type (maximum or minimum) of each identified extremum of the pre-processed signal are ascertained, and wherein the time transform to be applied to align first and second extrema of the pre-processed signal with first and second extrema of a stored waveform is determined provided the first extrema are of the same type and the second extrema are also of the same type.

4. Method as claimed in any one of the preceding claims, wherein the waveforms are stored for a reference speed of the vehicle, wherein an indication is obtained of the vehicle's speed at the instant said sensed signal is received, wherein the position in time of each identified extremum of the pre-processed signal is ascertained, and wherein the time transform to be applied to align first and second extrema of the pre-processed signal with first and second extrema of a stored waveform is determined provided the ratio between the time difference between the first and second extrema of the pre-processed signal and the time difference between the first and second extrema of said waveform is compatible with the reference speed and the obtained speed indication according to a predetermined compatibility criterion.

5. Method as claimed in any one of the preceding claims, wherein each of the stored waveforms corresponds to a period of a substantially periodic learning signal.

6. Method as claimed in any one of the preceding claims, wherein each waveform is stored over a number N of sampling points, wherein the time transform comprises a time shift and a time stretching of the pre-processed signal for aligning said extrema, and wherein the distance computation between the transformed signal and the waveform comprises re-sampling the waveform, the distance being computed over N points of the re-sampled waveform and of the transformed signal.

7. Device for processing a signal sensed by a receiver (10) installed on board a vehicle (1) having several wheels (2) fitted with respective detection and transmission modules (3), each detection and transmission module being capable of transmitting a detection signal including an indication of a state of the wheel fitted with said module, the device (4) comprising means (17) for comparing the sensed signal with a plurality of waveforms respectively stored in association with wheel positions to select a wheel position for which the stored waveform matches the sensed signal, **characterised in that** it further comprises means (18, 19) for pre-processing the sensed signal and means (20) for identifying extrema of the pre-processed signal, and **in that** the means (17) for comparing the sensed signal with a waveform comprise means for applying a time transform to the pre-processed signal to align first and second extrema of the pre-processed signal with first and second extrema of said waveform and means for computing a distance between the transformed signal and said waveform, the wheel position being selected by minimising the computed distance.

8. Device as claimed in claim 7, wherein the pre-processing means comprise at least one lowpass filter (18, 19).

9. Device as claimed in claim 7 or 8, wherein the means (20) for identifying the extrema of the pre-processed signal comprise means for ascertaining the position in time and the type (maximum or minimum) of each identified extremum of the pre-processed signal, and wherein the comparison means (17) comprise means for determining the time transform to be applied to align first and second extrema of the pre-processed signal with first and second extrema of a stored waveform provided the first extrema are of the same type and the second extrema are also of the same type.

10. Device as claimed in any one of claims 7 to 9, arranged to receive a speed indication of the vehicle at the instant said sensed signal is received, wherein the waveforms are stored for a reference speed of the vehicle, wherein the means (20) for identifying the extrema of the pre-processed signal comprise means for ascertaining the position in time of each identified extremum of the pre-processed signal, and wherein the comparison means (17) comprise means for determining the time transform to be applied in order to align first and second extrema of the pre-processed signal with first and second extrema of a stored waveform provided the ratio between the time difference between the first and second extrema of the pre-processed signal and the time difference between the first and second extrema of said waveform is compatible with the reference speed and the received speed indication according to a predetermined compatibility criterion.

11. Device as claimed in any one of claims 7 to 10, wherein each waveform is stored over a number N of sampling points, wherein the time transform comprises a time shift and a time stretching of the pre-processed signal for aligning said extrema, and wherein the distance computation between the transformed signal and the waveform comprises re-sampling the waveform, the distance being computed over N points of the re-sampled waveform and of the transformed signal.

12. Method of learning waveforms for a device (4) for processing a signal sensed by a receiver (10) installed on board a vehicle (1) having several wheels (2) fitted with respective detection and transmission modules (3), each detection and transmission module being capable of transmitting a detection signal including an indication of a state of the wheel fitted with said module, the method comprising the following steps for each of said vehicle wheels:
- recording a substantially periodic reference signal from a detection and transmission module;
- determining the period of the reference signal after a pre-processing;
- re-sampling a period of the pre-processed reference signal over N points, N being a predetermined number, and storing the re-sampled signal period;
- additionally storing the position in time and the type (maximum or minimum) of each extremum within the stored signal period.
